# EUROPÄISCHE PATENTANMELDUNG

(11) **EP 2 354 525 A1**
(43) Veröffentlichungstag der Anmeldung: **10.08.2011**
(21) Anmeldenummer: 11150722.4
(22) Anmeldetag: 12.01.2011
(51) Int. Cl.: F02M 39/00, F04B 23/10, F16D 3/04

(54) **Kupplung, insbesondere zum Koppeln einer Hochdruckpumpe mit einer Zahnradpumpe**

(30) Priorität: 13.01.2010 DE 102010000850
(71) Anmelder: Robert Bosch GmbH, 70442 Stuttgart (DE)
(72) Erfinder: Pichler, Robert, 5023 Salzburg-Gnigl (AT); Rainer, Ralf, 5570 Mauterndorf (AT)

(57) **Zusammenfassung**

Eine Kupplung (1), die insbesondere nach dem Prinzip einer Oldham-Kupplung zum Koppeln einer Hochdruckpumpe mit einer Zahnradpumpe dient, umfasst ein erstes Kupplungsstück (2), das einen Zweiflach (4) aufweist, und ein zweites Kupplungsstück (3), das einen Kupplungsschlitz (5) aufweist, in den der Zweiflach (4) des ersten Kupplungsstücks (2) zumindest teilweise eingreift. Hierbei ist in einem Druckbereich (17), in dem der Zweiflach (4) des ersten Kupplungsstücks (2) zur Übertragung eines Drehmoments zwischen dem ersten Kupplungsstück (2) und dem zweiten Kupplungsstück (3) eine Innenseite (19) des Kupplungsschlitzes (5) des zweiten Kupplungsstücks (3) beaufschlagt, die Innenseite (19) des Kupplungsschlitzes (5) mit einer konvexen Kontur (20) ausgestaltet. Hierdurch kann ein Kontaktdruck zwischen den Kupplungsstücken (2,3) durch eine angepasste Kontaktgeometrie verringert werden.

## Beschreibung

### Stand der Technik

Die Erfindung betrifft eine Kupplung, die insbesondere zum Koppeln einer Hochdruckpumpe mit einer Zahnradpumpe dient. Speziell betrifft die Erfindung das Gebiet der Pumpenanordnungen zur Brennstoffhochdruckversorgung bei Brennstoffeinspritzsystemen von Brennkraftmaschinen.

Aus der DE 197 36 160 A1 ist eine Pumpenanordnung zur Kraftstoffhochdruckversorgung bei Kraftstoffeinspritzsystemen von Brennkraftmaschinen bekannt. Speziell kann die bekannte Pumpenanordnung bei einem Common-Rail-Einspritzsystem zum Einsatz kommen. Die bekannte Pumpenanordnung umfasst eine Radialkolbenpumpe mit einer in einem Pumpengehäuse gelagerten Antriebswelle, die exzentrisch ausgebildet ist oder in Umfangsrichtung nockenartige Erhebungen aufweist, und vorzugsweise mehrere bezüglich der Antriebswelle radial in einem jeweiligen Zylinderraum angeordnete Kolben, die bei Umdrehen der Antriebswelle in dem Zylinderraum hin- und herbewegbar sind. Ferner ist eine der Radialkolbenpumpe vorgeschaltete Niederdruckpumpe vorgesehen. Um die Pumpenanordnung derart zu verbessern, dass sie kompakter und kostengünstiger herstellbar ist und die Gefahr des Auftretens von Leckagestellen reduziert wird, ist die Niederdruckpumpe am oder im Pumpengehäuse der Radialkolbenpumpe auf der der Antriebsseite abgewandten Seite vorgesehen und von der Antriebswelle der Radialkolbenpumpe antreibbar. Die Niederdruckpumpe ist als Zahnradpumpe ausgestaltet. Der Antrieb der Niederdruckpumpe erfolgt über eine Kupplung durch die Antriebswelle der Radialkolbenpumpe. Die Antriebswelle ist mit einem Innenprofil ausgebildet, das als 6-Rund ausgeführt ist. Die Kupplung weist ein komplementär ausgebildetes Gegenprofil auf, das eine formschlüssige Drehmitnahme bewirkt. Niederdruckpumpenseitig ist das angetriebene Zahnrad über ein formschlüssiges, eine Drehmitnahme bewirkendes Profil mit dem abtriebseitigen Kupplungsteil verbunden. Über das Spiel der beiden Profilpaarungen werden Fluchtungsabweichungen zwischen der Antriebswelle und dem Zahnrad ausgeglichen.

Die aus der DE 197 36 160 A1 bekannte Pumpenanordnung hat den Nachteil, dass es im Bereich der Kupplung zu einem Verschleiß auf Grund punktueller Belastung kommen kann.

### Offenbarung der Erfindung

Die erfindungsgemäße Kupplung mit den Merkmalen des Anspruchs 1 hat demgegenüber den Vorteil, dass eine optimierte Übertragung eines Drehmoments ermöglicht ist. Speziell kann eine Pressungsverteilung optimiert und somit eine Robustheit verbessert und/oder ein Verschleiß verringert werden.

Durch die in den Unteransprüchen aufgeführten Maßnahmen sind vorteilhafte Weiterbildungen der im Anspruch 1 angegebenen Kupplung möglich.

Die Kupplungsstücke der Kupplung können jeweils an einer Welle ausgestaltet sein oder auf geeignete Weise mit jeweils einer Welle verbunden sein. Ein Kupplungsstück kann auch als Zwischenstück dienen. Speziell kann das erste Kupplungsstück, das den Zweiflach aufweist, an einer Welle einer Hochdruckpumpe ausgestaltet sein. Solch eine Welle der Hochdruckpumpe kann hierbei als Antriebswelle für die Hochdruckpumpe dienen und über die Kupplung eine Niederdruckpumpe, insbesondere eine Zahnradpumpe, antreiben. Speziell kann die Kupplung als Oldham-Kupplung ausgestaltet sein.

Vorteilhaft ist es, dass die abschnittsweise konvexe Kontur der Innenseite des Kupplungsschlitzes an einer Längsseite des Kupplungsschlitzes vorgesehen ist. Hierbei ist es ferner vorteilhaft, dass die abschnittsweise konvexe Kontur der Innenseite in einem Endbereich der Längsseite des Kupplungsschlitzes vorgesehen ist. Hierdurch kann die Belastung der Paarung des Zweiflachs mit dem Kupplungsschlitz des zweiten Kupplungsstücks über einen größeren Bereich verteilt werden. Hierdurch können speziell punktuelle Belastungen vermieden werden. Durch die Anordnung der konvexen Kontur in dem Endbereich der Längsseite kann gerade in einem Bereich, in dem in der Regel die Belastung auftritt, eine vorteilhafte Reduzierung der Flächenpressung zwischen dem Zweiflach und dem Kupplungsstück erzielt werden.

Vorteilhaft ist es auch, dass die konvexe Kontur der Innenseite des Kupplungsschlitzes zumindest im Wesentlichen mit einem vorgegebenen Krümmungsradius ausgestaltet ist. Solch ein Krümmungsradius kann von mehreren Parametern abhängen. Beispielsweise kann der Krümmungsradius von der Toleranz und Breite des Kupplungsschlitzes abhängen. Ferner kann eine Abhängigkeit von der Toleranz und Breite des Zweiflachs des ersten Kupplungsstücks bestehen. Außerdem kann der vorgegebene Krümmungsradius in Bezug auf eine Toleranz und Höhe des Zweiflachs gewählt werden. Als weiterer Parameter zur Bestimmung des Krümmungsradiuses kann ein auszugleichender Achsversatz dienen. Somit ist in Bezug auf den jeweiligen Anwendungsfall eine geeignete Vorgabe des Krümmungsradiuses der konvexen Kontur der Innenseite des Kupplungsschlitzes möglich.

Ferner ist es vorteilhaft, dass der Zweiflach des ersten Kupplungsstücks in dem Druckbereich zumindest im Wesentlichen mit einer abschnittsweise geradlinigen Kontur ausgestaltet ist. Hierdurch ist eine konstruktiv einfache Ausgestaltung des ersten Kupplungsstücks möglich. Speziell kann allein durch eine konstruktive Anpassung des zweiten Kupplungsstücks, an dem der Kupplungsschlitz ausgebildet ist, eine verbesserte Pressungsverteilung erzielt werden.

Vorteilhaft ist es allerdings auch, dass der Zweiflach des ersten Kupplungsstück in dem Druckbereich mit einer abschnittsweise konkaven Kontur ausgestaltet ist. Hierbei ist es von besonderem Vorteil, dass die konkave Kontur des Zweiflachs in dem Druckbereich an die konvexe Kontur des Kupplungsschlitzes angepasst ist. Hierdurch kann eine optimierte Ausgestaltung sowohl durch Anpassung des ersten Kupplungsstücks als auch durch Anpassung des zweiten Kupplungsstücks erfolgen, wobei das erste Kupplungsstück und das zweite Kupplungsstück in vorteilhafter Weise auch aufeinander angepasst sind. Auf diese Weise kann eine optimierte Pressungsverteilung zur Übertragung eines Drehmoments erzielt werden.

Vorteilhaft ist es ferner, dass in zumindest einem weiteren Druckbereich, der zu dem Druckbereich bezüglich einer Drehachse um 180° versetzt angeordnet ist und in dem der Zweiflach des ersten Kupplungsstück zur Übertragung des Drehmoments zwischen dem ersten Kupplungsstück und dem zweiten Kupplungsstück die Innenseite des Kupplungsschlitzes des zweiten Kupplungsstücks beaufschlagt, die Innenseite des Kupplungsschlitzes abschnittsweise mit einer konvexen Kontur ausgestaltet ist. Hierdurch kann in Bezug auf eine vorgegebene Drehrichtung um die Drehachse eine konstruktive Anpassung an den beiden bei dieser Drehung in der Regel stark belasteten Bereichen vorgenommen werden. Somit ergibt sich eine optimierte Ausgestaltung sowohl des gesamten Kupplungsschlitzes als auch des gesamten Zweiflachs in Bezug auf eine bestimmte Drehrichtung. Ferner kann auch eine Anpassung in Bezug auf eine weitere Drehrichtung erfolgen. Dies ist speziell bei einer Kupplung, die zur Übertragung eines Drehmoments bei wechselnder Drehrichtung dient, von Vorteil.

Die konvexe Kontur der Innenseite des Kupplungsschlitzes in dem Druckbereich und die konvexe Kontur der Innenseite des Kupplungsschlitzes in dem weiteren Druckbereich sind vorzugsweise einander entsprechend ausgestaltet. Somit wird eine vergleichbare Materialbelastung in den beiden Druckbereichen erzielt. Der Kupplungsschlitz kann in vorteilhafter Weise als Langloch-förmiger Kupplungsschlitz ausgestaltet sein.

### Kurze Beschreibung der Zeichnungen

Bevorzugte Ausführungsbeispiele der Erfindung sind in der nachfolgenden Beschreibung unter Bezugnahme auf die beigefügten Zeichnungen, in denen sich entsprechende Elemente mit übereinstimmenden Bezugszeichen versehen sind, näher erläutert. Es zeigt:
Fig. 1 ein erstes Ausführungsbeispiel einer Kupplung der Erfindung in einer auszugsweisen, schematischen Schnittdarstellung und
Fig. 2 den in Fig. 1 mit II bezeichneten Ausschnitt der Kupplung entsprechend dem ersten Ausführungsbeispiel der Erfindung in einer schematischen Schnittdarstellung und
Fig. 3 den in Fig. 2 gezeigten Ausschnitt der Kupplung entsprechend einem zweiten Ausführungsbeispiel der Erfindung.

### Ausführungsformen der Erfindung

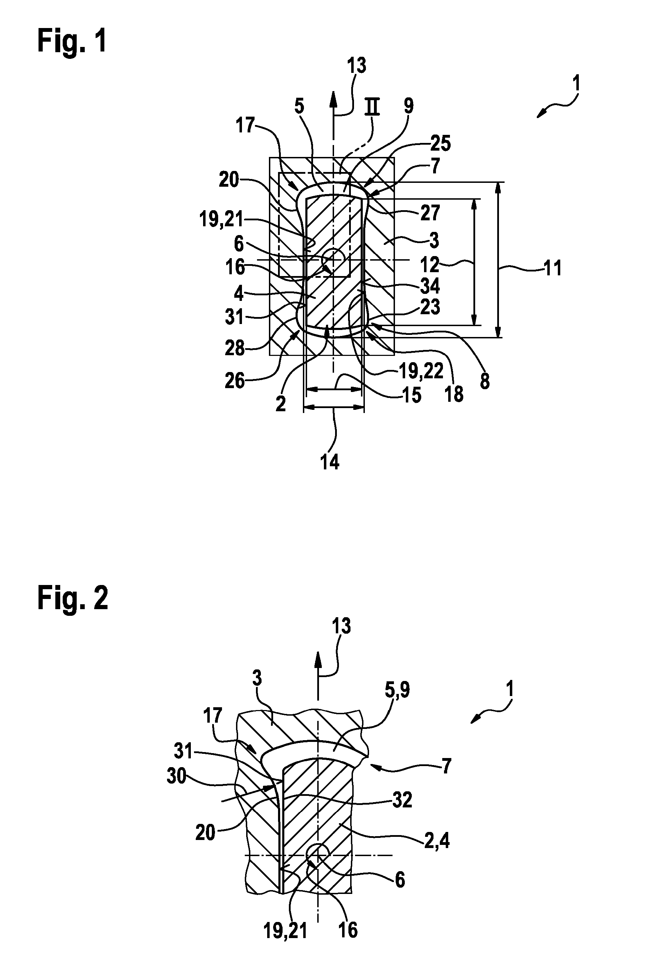

Fig. 1 zeigt eine Kupplung 1 mit einem ersten Kupplungstück 2 und einem zweiten Kupplungsstück 3. Die Kupplung 1 dient insbesondere zum Koppeln einer Hochdruckpumpe mit einer Niederdruckpumpe. Speziell dient die Kupplung 1 zum Koppeln einer Hochdruckpumpe mit einer Zahnradpumpe. Hierbei kann eines der Kupplungsstücke 2, 3 an einer Antriebswelle der Hochdruckpumpe ausgestaltet sein, während das andere Kupplungsstück 2, 3 direkt oder mittelbar mit einem Zahnrad oder einem anderen Element der Niederdruckpumpe verbunden ist. Ein bevorzugter Einsatz der Kupplung 1 besteht für eine Pumpenanordnung, die für eine Brennstoffeinspritzanlage von luftverdichten, selbstzündenden Brennkraftmaschinen dient. Die erfindungsgemäße Kupplung 1 eignet sich jedoch auch für andere Anwendungsfälle.

Das Kupplungsstück 2 weist einen Zweiflach 4 auf. Das Kupplungsstück 3 weist einen Kupplungsschlitz 5 auf, der als Langloch-förmiger Kupplungsschlitz 5 ausgestaltet ist. Der Zweiflach 4 des Kupplungsstück 2 ist in den Kupplungsschlitz 5 des Kupplungsstücks 3 eingefügt. Hierdurch ist eine Wirkverbindung zwischen den Kupplungsstücken 2, 3 gebildet, die die Übertragung eines Drehmoments ermöglicht. Bei der Übertragung des Drehmoments ist ein gewisses Spiel zwischen den Kupplungsstücken 2, 3 ermöglicht.

Vorzugsweise sind die beiden Kupplungsstücke 2, 3 an einer gemeinsamen Drehachse 6 ausgerichtet. Allerdings kann es auf Grund von Toleranzen, einem Lagerspiel oder dergleichen zu gewissen Ausgleichsbewegungen zwischen den Kupplungsstücken 2, 3 kommen. Der Kupplungsschlitz 5 weist Endbereiche 7, 8 auf, in denen Freiräume 9, 10 des Kupplungsschlitzes 5 bezüglich des Zweiflachs 4 vorgesehen sind. Eine Höhe 11 des Kupplungsschlitzes 5 ist etwas größer vorgegeben als eine Höhe 12 des Zweiflachs 4. Hierdurch ist eine gewisse Verschiebbarkeit des Zweiflachs 4 in und entgegen einer radialen Richtung 13 relativ zu dem Kupplungsschlitz 5 ermöglicht.

Ferner ist eine Breite 14 des Kupplungsschlitzes 5 vorgegeben, die vorzugsweise etwa gleich groß wie eine Breite 15 des Zweiflachs 4 ist. Die Breite 15 des Zweiflachs 4 kann allerdings auch etwas kleiner als die Breite 14 des Kupplungsschlitzes 5 sein. Eine mögliche Ursache sind Toleranzen zwischen dem Kupplungsschlitz 5 und dem Zweiflach 4.

Somit ist der Ausgleich es Achsversatzes zwischen dem Kupplungsstück 2 und dem Kupplungsstück 3 möglich.

Im Betrieb rotieren die Kupplungsstücke 2, 3 beispielsweise in einer Drehrichtung 16, die in der Fig. 1 entgegen dem Uhrzeigersinn orientiert ist. Hierbei nimmt in diesem Beispiel das Kupplungsstück 2 das Kupplungsstück 3 mit. In diesem Fall ist für die Übertragung des Drehmoments eine Zusammenwirkung des Zweiflachs 4 des Kupplungsstück 2 mit dem Kupplungsschlitz 5 des Kupplungsstücks 3 in einem Druckbereich 17 und einem weiteren Druckbereich 18 von besonderer Bedeutung.

In dem Druckbereich 17, in dem der Zweiflach 4 des Kupplungsstück 2 zur Übertragung des Drehmoments eine Innenseite 19 des Kupplungsschlitzes 5 des Kupplungsstücks 3 beaufschlagt, ist die Innenseite 19 des Kupplungsschlitzes 5 abschnittsweise mit einer konvexen Kontur 20 ausgestaltet. Hierbei ist die konvexe Kontur 20 an einer Längsseite 21 des Kupplungsschlitzes 5 an der Innenseite 19 vorgesehen. Der Druckbereich 17, in dem die konvexe Kontur 20 an der Längsseite 21 ausgestaltet ist, liegt in diesem Ausführungsbeispiel in dem Endbereich 7 des Kupplungsschlitzes 5. Hierdurch wird eine gleichmäßige Belastung des Kupplungsschlitzes 5 an seiner Längsseite 21, insbesondere im Bereich der konvexen Kontur 20, erzielt. Speziell wird auch bei einer gewissen Toleranz zwischen dem Zweiflach 4 und dem Kupplungsschlitz 5 eine punktuelle Belastung der Längsseite 21 speziell in dem Endbereich 7 vermieden. Entsprechend ist auch in dem weiteren Druckbereich 18 eine Längsseite 22 der Innenseite 19 des Kupplungsschlitzes 5 mit einer konvexen Kontur 23 ausgestaltet. Somit ist in den beiden Druckbereichen 17, 18, in denen der Zweiflach 4 bei der Übertragung des Drehmoments in der Drehrichtung 16 an der Innenseite 19 anliegt, eine optimierte Pressungsverteilung erzielt, wobei punktuelle Flächenpressungen vermieden sind. Dies ist auch bei einem Achsversatz zwischen den Kupplungsstücken 2, 3 der Fall. Somit ergib sich eine vorteilhafte Übertragung des Drehmoments.

Außerdem kann auch in Druckbereichen 25, 26, die bei einer Übertragung eines Drehmoments von dem Zweiflach 4 des Kupplungsstücks 2 auf den Kupplungsschlitz 5 des Kupplungsstück 3 entgegen der Drehrichtung 16 relevant sind, eine Ausgestaltung der Innenseite 19 mit konvexen Konturen 27, 28 vorgesehen sein. Das Drehmoment kann auch von dem Kupplungsstück 3 auf das Kupplungsstück 2 übertragen werden, wobei je nach Drehrichtung eine Ausgestaltung von konvexen Konturen 20, 23 in den Druckbereichen 17, 18 und/oder von konvexen Konturen 27, 28 in den Druckbereichen 25, 26 an der Innenseite 19 vorgesehen ist.

Fig. 2 zeigt den in Fig. 1 mit II bezeichneten Ausschnitt der Kupplung 1 in einer detaillierten Darstellung. Die konvexe Kontur 20 an der Längsseite 21 der Innenseite 19 des Kupplungsschlitzes 5 des Kupplungsstücks 3 ist im Wesentlichen mit einem vorgegebenen Krümmungsradius 30 ausgestaltet. Der Zweiflach 4 ist an seiner der Längsseite 21 des Kupplungsschlitzes 5 zugewandten Seite 31 mit einer geradlinigen Kontur 32 ausgestaltet. Somit hat der Zweiflach 4 im Druckbereich 17 eine geradlinige Kontur 32.

Der Krümmungsradis 30 der konvexen Kontur 20 der Innenseite 19 des Kupplungsschlitzes 5 kann in Abhängigkeit von einer Toleranz und/oder einer Breite 14 des Kupplungsschlitzes 5 und/oder einer Toleranz und/oder einer Breite 15 des Zweiflachs 4 und/oder einer Toleranz und/oder einer Höhe 12 des Zweiflachs 4 und/oder einem Bereich für einen auszugleichenden Achsversatz der Kupplungsstücke 2, 3 bezüglich der Drehachse 6 vorgegeben sein. Hierdurch ist eine optimierte Ausgestaltung der konvexen Kontur 30 an der Innenseite 19 im Druckbereich 17 möglich. Entsprechend können auch die anderen Konturen 23, 27, 28 in den Druckbereichen 18, 25, 26 ausgestaltet sein.

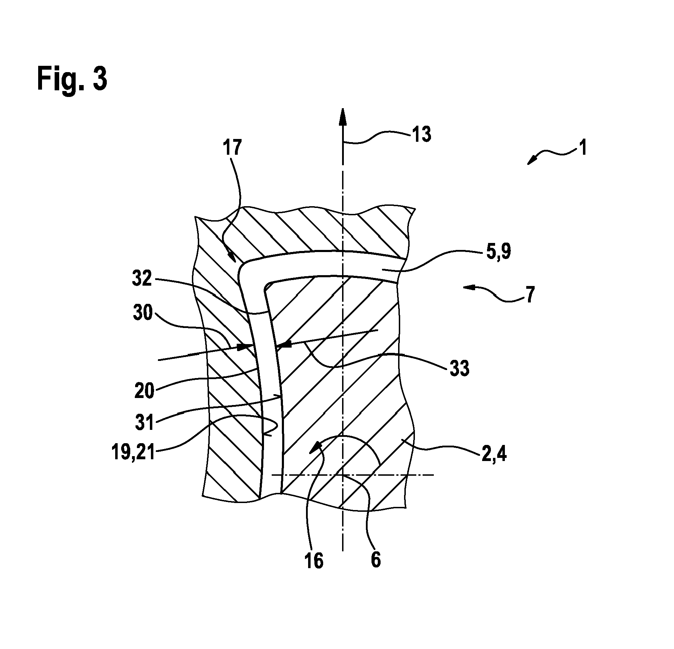

Fig. 3 zeigt den in Fig. 2 dargestellten Ausschnitt der Kupplung 1 entsprechend einem zweiten Ausführungsbeispiel. In diesem Ausführungsbeispiel weist der Kupplungsschlitz 5 an seiner Innenseite 19 im Druckbereich 17 die konvexe Kontur 20 auf, wobei ein Krümmungsradius 30 vorgegeben ist. Der Zweiflach 4 ist in diesem Ausführungsbeispiel an seiner Seite 31 zumindest im Druckbereich 17 mit einer nicht geradlinigen Kontur 32 ausgestaltet. Hierbei ist die Kontur 32 in diesem Ausführungsbeispiel als konkave Kontur 32 vorgegeben. Die konkave Kontur 32 der Seite 31 des Zweiflachs 4 des Kupplungsstücks 2 ist an die konvexe Kontur 20 des Kupplungsschlitzes 5 angepasst. Hierbei ist in diesem Ausführungsbeispiel ein Krümmungsradius 33 für die konkave Kontur 32 vorgegeben. Der Krümmungsradius 33 ist hierbei betragsmäßig zumindest näherungsweise gleich groß gewählt wie der Krümmungsradius 30 der konvexen Kontur 20 des Kupplungsschlitzes 5. Somit ist eine vorteilhafte Abstimmung der Ausgestaltung des Zweiflachs 4 an die Ausgestaltung des Kupplungsschlitzes 5 speziell im Druckbereich 17 erzielt.

Entsprechend kann in dem weiteren Druckbereich 18, der bezüglich der Drehachse 6 um 180° versetzt zu dem Druckbereich 17 angeordnet ist, eine aneinander angepasste Ausgestaltung der Innenseite 19 und einer weiteren Seite 34 (Fig. 1) des Zweiflachs 4 vorgesehen sein. Je nach vorgesehener Drehrichtung können zusätzlich oder auch alternativ auch angepasste Ausgestaltungen in den Druckbereichen 25, 26 einerseits bezüglich des Zweiflachs 4 und andererseits bezüglich des Kupplungsschlitzes 5 vorgesehen sein.

Somit kann in vorteilhafter Weise eine als Oldham-Kupplung 1 ausgestaltete Kupplung 1 geschaffen werden, bei der ein Kontaktdruck zwischen den Kupplungstücken 2, 3 durch eine angepasste Kontaktgeometrie verringert ist. Hierdurch wird eine optimierte Pressungsverteilung erzielt, so dass in weiterer Folge die Flächenpressung zwischen den Kupplungsstücken 2, 3 maßgeblich reduziert ist. Ein Beispiel für den vorgegebenen Krümmungsradius 30 sind 50 mm. Je nach Ausgestaltung der Kupplung und des gewünschten Einsatzbereichs sind allerdings auch andere Krümmungsradien 30 denkbar. Somit kann eine formschlüssige Kupplung 1 ausgestaltet werden. Im Betrieb auftretende Achsversätze zwischen den Kupplungsstücken 2, 3 werden hierbei ausgeglichen. Auch bei einem beschränkten Bauraum ergeben sich günstige Hebellänge und Pressungsverteilungen im Kontaktbereich, insbesondere in den Druckbereichen 17, 18, 25, 26.

Die Erfindung ist nicht auf die beschriebenen Ausführungsbeispiele beschränkt.

## Patentansprüche

1. Kupplung (1), insbesondere zum Koppeln einer Hochdruckpumpe mit einer Zahnradpumpe mit einem ersten Kupplungsstuck (2), das einen Zweiflach (4) aufweist, und einem zweiten Kupplungsstück (3), das einen Kupplungsschlitz (5) aufweist, in den der Zweiflach (4) des ersten Kupplungsstück (2) zumindest teilweise eingreift, wobei in zumindest einem Druckbereich (17), in dem der Zweiflach (4) des ersten Kupplungsstücks (2) zur Übertragung eines Drehmoments zwischen dem ersten Kupplungsstück (2) und dem zweiten Kupplungsstück (3) eine Innenseite (19) des Kupplungsschlitzes (5) des zweiten Kupplungsstücks (3) beaufschlagt, die Innenseite (19) des Kupplungsschlitzes (5) zumindest abschnittsweise mit einer konvexen Kontur (20) ausgestaltet ist.

2. Kupplung nach Anspruch 1,
**dadurch gekennzeichnet,**
**dass** die abschnittsweise konvexe Kontur (20) der Innenseite (19) des Kupplungsschlitzes (5) an einer Längsseite (21) des Kupplungsschlitzes (5) vorgesehen ist.

3. Kupplung nach Anspruch 2,
**dadurch gekennzeichnet,**
**dass** die abschnittsweise konvexe Kontur (20) der Innenseite (19) in einem Endbereich (7) der Längsseite (21) des Kupplungsschlitzes (5) vorgesehen ist.

4. Kupplung nach einem der Ansprüche 1 bis 3,
**dadurch gekennzeichnet,**
**dass** die konvexe Kontur (20) der Innenseite (19) des Kupplungsschlitzes (5) zumindest im Wesentlichen mit einem vorgegebenen Krümmungsradius (30) ausgestaltet ist.

5. Kupplung nach einem der Ansprüche 1 bis 4,
**dadurch gekennzeichnet,**
**dass** der Zweiflach (4) des ersten Kupplungsstücks (2) in dem Druckbereich (17) zumindest im Wesentlichen mit einer zumindest abschnittsweise geradlinigen Kontur (32) ausgestaltet ist.

6. Kupplung nach einem der Ansprüche 1 bis 4,
**dadurch gekennzeichnet,**
**dass** der Zweiflach (4) des ersten Kupplungsstücks (2) in dem Druckbereich (17) mit einer zumindest abschnittsweise konkaven Kontur (32) ausgestaltet ist.

7. Kupplung nach Anspruch 6,
**dadurch gekennzeichnet,**
**dass** die konkave Kontur (32) des Zweiflachs (4) in dem Druckbereich (17) an die konvexe Kontur (20) des Kupplungsschlitzes (5) angepasst ist.

8. Kupplung nach einem der Ansprüche 1 bis 7,
**dadurch gekennzeichnet,**
**dass** in zumindest einem weiteren Druckbereich (18), der zu dem Druckbereich (17) bezüglich einer Drehachse (6) um 180° versetzt angeordnet ist und in dem der Zweiflach (4) des ersten Kupplungsstücks (2) zur Übertragung des Drehmoments zwischen dem ersten Kupplungsstück (2) und dem zweiten Kupplungsstück (3) die Innenseite (19) des Kupplungsschlitzes (5) des zweiten Kupplungsstücks (3) beaufschlagt, die Innenseite (19) des Kupplungsschlitzes (5) zumindest abschnittsweise mit einer konvexen Kontur (23) ausgestaltet ist.

9. Kupplung nach Anspruch 8,
**dadurch gekennzeichnet,**
**dass** die konvexe Kontur (20) der Innenseite (19) des Kupplungsschlitzes (5) in dem Druckbereich (17) und die konvexe Kontur (23) der Innenseite (19) des Kupplungsschlitzes (5) in dem weiteren Druckbereich (18) einander entsprechend ausgestaltet sind.

10. Kupplung nach einem der Ansprüche 1 bis 9,
**dadurch gekennzeichnet,**
**dass** der Kupplungsschlitz (5) als Langloch-förmiger Kupplungsschlitz (5) ausgestaltet ist.
